**Europäisches Patentamt**

**European Patent Office**

**Office européen des brevets**

(11) Veröffentlichungsnummer: **0 535 514 A1**

# (12) EUROPÄISCHE PATENTANMELDUNG

(21) Anmeldenummer: **92116231.9**

(22) Anmeldetag: **23.09.92**

(51) Int. Cl.5: **C01B 21/14**

(30) Priorität: **02.10.91 DE 4132800**

(43) Veröffentlichungstag der Anmeldung:
**07.04.93 Patentblatt 93/14**

(84) Benannte Vertragsstaaten:
**BE CH DE ES FR GB IT LI NL**

(71) Anmelder: **BASF Aktiengesellschaft**
**Carl-Bosch-Strasse 38**
**W-6700 Ludwigshafen(DE)**

(72) Erfinder: **Wilms, Axel, Dr.**
**Raiffeissenstrasse 25**
**W-6714 Weisenheim(DE)**
Erfinder: **Magnussen, Peter, Dr.**
**Prof.-Dillinger-Weg 25**
**W-6702 Bad Duerkheim(DE)**
Erfinder: **Neubauer, Gerald, Dr.**
**Mozartstrasse 24**
**W-6940 Weinheim(DE)**
Erfinder: **Ritz, Josef, Dr.**
**Osloer Weg 8**
**W-6700 Ludwigshafen(DE)**
Erfinder: **Fuchs, Hugo, Dr.**
**Egellstrasse 28**
**W-6700 Ludwigshafen(DE)**
Erfinder: **Thomas, Erwin**
**Borngasse 12**
**W-6713 Freinsheim(DE)**
Erfinder: **Guns, Luc**
**Dubliner Strasse 30**
**W-6700 Ludwigshafen(DE)**

(54) **Verfahren zur Herstellung von Hydroxylammoniumsulfat.**

(57) Verfahren zur Herstellung von Hydroxylammoniumsulfat durch katalytische Reduktion von Stickstoffmonoxid mit Wasserstoff in wäßriger Schwefelsäure in Gegenwart von suspendierten Platinträgerkatalysatoren bei erhöhter Temperatur, dadurch gekennzeichnet, daß man während der Reaktion eine Konzentration an freier Schwefelsäure von 0,3 n bis 3,0 n einhält und am Ende der Reaktion den Gehalt an freier Schwefelsäure abfallen läßt.

Hydroxylammoniumsulfat wird im großtechnischen Maßstab durch Reduktion von Stickstoffmonoxid mit Wasserstoff in Gegenwart von suspendierten Platin-Katalysatoren in wäßriger Schwefelsäure hergestellt. Es wurden schon viele Versuche unternommen, die Reaktionsgeschwindigkeit durch Veränderung des Katalysators zu beeinflussen und die Bildung von Nebenprodukten zu minimieren.

Aus der deutschen Patentschrift 1 177 118 ist bekannt, daß man Hydroxylammoniumsulfat kontinuierlich in mehreren hintereinander geschalteten Stufen herstellt, wobei in der ersten Stufe 4,5 n Schwefelsäure zugesetzt wird und die Konzentration der Schwefelsäure von Stufe zu Stufe in dem Maß wie Hydroxylamim gebildet wird abnimmt. Dieses Verfahren hat sich über lange Jahre bewährt, es besteht jedoch der Bedarf, die Rekationsgeschwindigkeit weiter zu verbessern. Aus der deutschen Patentschrift 2 100 036 war auch schon bekannt, daß man bei der Herstellung von Hydroxylammoniumnitrat zunächst den suspendierten Platin-Katalysator in Wasser durch Behandeln mit Wasserstoff aktiviert und dann unter Zusatz von Salpetersäure ein Gemisch aus Stickstoffmonoxid und Wasserstoff einleitet, mit der Maßgabe, daß eine Konzentration an freier Salpetersäure von 1,5 bis 2 n aufrechterhalten wird. Diese Arbeitsweise kann in einer oder mehreren Stufen durchgeführt werden, indem man durch Zuführen von Salpetersäure zu einzelnen Stufen oder durch Rückführung eines Teiles der in der letzten Stufe erhaltenen Reaktionslösung zur ersten Stufe die Konzentration an freier Säure in dem gewünschten Bereich hält. Die Vorzüge dieser Arbeitsweise ergeben sich gemäß der Patentschrift 2 100 036 aufgrund der besonderen chemischen Eigenschaften der Salpetersäure als oxidierender Säure. Bei Einsatz von Salpetersäure im Gegensatz zum Einsatz nichtoxidierender Säuren wie z.B. Schwefelsäure führt die Anwendung von Säure in hoher Konzentration vor der Behandlung mit Wasserstoff zur völligen Inaktivierung des Katalysators. Dies ist darauf zurückzuführen, daß $HNO_3$ in Konkurrenz zu $H_2$ und NO freie Katalysatorplätze belegen und blockieren kann. Bei nichtoxidierenden Säuren wie z.B. Schwefelsäure ist gemäß Patentschrift 2 100 036 die spezielle Arbeitsweise nicht erforderlich und bringt keine Vorzüge mit sich. Es wird in dieser Patentschrift kein Hinweis gegeben, wie die Reaktionsgeschwindigkeit bei der Herstellung von Hydroxylammoniumsulfat erhöht werden kann.

Es war deshalb die technische Aufgabe gestellt, ein Verfahren zur Herstellung von Hydroxylammoniumsulfat zur Verfügung zu stellen, bei dem eine möglichst hohe Reaktionsgeschwindigkeit erzielt wird und die Bildung von Nebenprodukten minimiert wird.

Diese Aufgabe wird gelöst, in einem Verfahren zur Herstellung von Hydroxylammoniumsulfat durch katalytische Reduktion von Stickstoffmonoxid mit Wasserstoff in wäßriger Schwefelsäure in Gegenwart von suspendierten Platinträgerkatalysatoren bei erhöhter Temperatur, dadurch gekennzeichnet, daß man während der Reaktion eine Konzentration von freier Schwefelsäure von 0,3 n bis 3,0 n einhält und am Ende der Reaktion den Gehalt an freier Schwefelsäure abfallen läßt.

Das neue Verfahren hat den Vorteil, daß es mit hoher Geschwindigkeit verläuft und gestattet, ohne Vergrößerung des Reaktionsraumes einen erhöhten Durchsatz zu erzielen.

In der Regel hält man ein Molverhältnis von Wasserstoff zu Stickstoffmonoxid von 1,5:1 bis 6:1 ein. Besonders gute Ergebnisse erhält man, wenn man darauf achtet, daß in der Reaktionszone ein Molverhältnis von Wasserstoff zu Stickstoffmonoxid von 3,5 bis 5:1 aufrechterhalten wird.

Die Umsetzung führt man in wäßriger Schwefelsäure durch. Geeignet sind auch saure Salze der Schwefelsäure wie Ammoniumbisulfat. In der Regel geht man z.B. von 1,0 n bis 3,0 n wäßriger Schwefelsäure aus.

Die Umsetzung führt man vorteilhaft bei Temperaturen von 30 bis 80°C durch. Besonders bewährt haben sich Temperaturen von 40 bis 60°C. In der Regel führt man die Umsetzung bei Atmosphärendruck oder erhöhtem Druck z.B. bis zu 30 bar durch. Besonders bewährt hat sich die erfindungsgemäße Arbeitsweise, wenn man die Umsetzung unter erhöhtem Druck durchführt, z.B. von 1,5 bis 20 bar.

Die Umsetzung wird in Gegenwart von suspendierten Platinträgerkatalysatoren durchgeführt. Besonders bewährt haben sich Platin auf Kohleträger, z.B. Aktivkohle, insbesondere auf Graphit. Vorzugsweise hat ein solcher Trägerkatalysator einen Gehalt von 0,5 bis 5 Gew.-% Platin, insbesondere von 0,3 bis 1 Gew.-% Platin. Man verwendet vorteilhaft Platinträgerkatalysatoren, deren Anteile mit einer Korngröße von weniger als 10 μm, weniger als 10 Gew.-% betragen. Vorzugsweise wird ein Platinträgerkatalysator mit einer Korngröße von 30 bis 90 μm verwendet. Die Feinanteile des Katalysators können unschwer durch geeignete Maßnahmen, z.B. Sieben, entwendet werden. Vorteilhaft enthalten die Katalysatoren zusätzlich ein oder mehrere Elemente der 5. und/oder 6. Gruppe des periodischen Systems mit einem Atomgewicht > 31, oder Blei und/oder Quecksilber als entgiftende Mittel. Besonders bevorzugt sind Schwefel oder Selen als entgiftende Mittel. Geeignete Katalysatoren und deren Herstellung werden beispielsweise beschrieben in der DE-PS 10 88 037 oder der EP-Patentschrift 287 952.

Die Umsetzung kann in einer Reaktionszone durchgeführt werden, wobei man von einer Schwefelsäure z.B. von 1,0 n bis 3,0 n ausgeht und im Verlauf der Reaktion konzentriertere Schwefelsäure zugibt, mit der Maßgabe, daß der Gehalt an freier Schwefelsäure im Reaktionsgemisch von 0,3 n bis 3,0 n insbesondere von 0,5 n bis 1,5 n beträgt und man am Ende der Reaktion den Gehalt an freier Schwefelsäure abfallen läßt, z.B. bis auf 0,3 bis 0,1 n. Vorteilhaft wird die Umsetzung in mehreren hintereinander geschalteten Reaktionszonen durchgeführt, z.B. 2 bis 8 Reaktionszonen. Hierbei wird der ersten Reaktionszone verdünnte Schwefelsäure von nicht mehr als 3,0 n zugeführt und in den nachfolgenden Reaktionszonen konzentriertere Schwefelsäure, z.B. von 30 bis 37 n, zugeführt, mit der Maßgabe, daß im Reaktionsgemisch der Gehalt an freier Schwefelsäure von 0,3 n bis 3,0 n beträgt. Vorteilhaft erhält man im Verlauf der Reaktion einen Gehalt an freier Schwefelsäure von 0,5 n bis 1,5 n aufrecht. Die Zugabe der konzentrierteren Schwefelsäure im Verlauf der Reaktion kann in jeder der nachfolgenden Reaktionszonen oder wahlweise in jede 2. oder 3. Reaktionszone erfolgen. Am Ende der Reaktion, d.h. in der letzten Reaktionszone, läßt man den Gehalt an freier Schwefelsäure absinken, z.B. bis zu 0,3 bis 0,1 n. Es versteht sich, daß jede Reaktionszone mit dem Gemisch aus Stickstoffmonoxid und Wasserstoff beaufschlagt wird. Der Katalysator wird vorteilhaft der ersten Reaktionszone zugeführt und durchläuft die nachfolgenden Reaktionszonen und wird dort wieder abgetrennt, z.B. durch Dekantieren oder Filtration und in der ersten Reaktionszone eingesetzt.

Das nach dem Verfahren der Erfindung erhältliche Hydroxylammoniumsulfat wird in großem Umfang zur Herstellung von Cyclohexanonoxim einer Ausgangsverbindung zur Herstellung von Caprolactam verwendet.

Das Verfahren nach der Erfindung sei an folgenden Beispielen veranschaulicht.

Beispiele 1 bis 3 und Vergleichsbeispiele 1 bis 3

In einem Rührkessel der mit verdünnter Schwefelsäure sowie ein Graphitträgerkatalysator mit einem Platingehalt von 0,5 Gew.-% beschickt ist, wird bei einer Temperatur von 40°C ein Gemisch aus Stickstoffmonoxid und Wasserstoff im Molverhältnis von 1:2 bis 1:9 eingeleitet. Die weiteren Daten sowie die erzielten Ergebnisse sind aus den nachfolgenden Tabellen 1 bis 3 zu entnehmen.

Tabelle 1

|  | Vergleichsbeispiel 1 | | Beispiel 1 | |
| --- | --- | --- | --- | --- |
|  | Synthese bei Einsatz von Säure mit hoher Konzentration | | Synthese bei Einsatz von Säure mit niedriger Konzentration | |
|  | Gew.-% | n | Gew.-% | n |
| Schwefelsäurekonzentration |  |  |  |  |
| t = 0 h | 38,5 | 10,2 | 10,2 | 2,2 |
| t = 2 h | 38,1 | 10,0 | 7,8 | 1,6 |
| t = 4 h | 37,4 | 9,8 | 4,8 | 1,0 |
| Hydroxylammonium-sulfatkonzentration |  |  |  |  |
| t = 0 h | 0,5 |  | 0,3 |  |
| t = 2 h | 1,0 |  | 3,1 |  |
| t = 4 h | 1,8 |  | 6,6 |  |
| Mittlere Bildungsgeschwindigkeit von Hydroxylamin (HA) (mol-HA/l/h) | 0,052 |  | 0,21 |  |

Gemeinsame Bedingungen:  4 % Katalysatorgehalt der Suspension
0,25 l-NO/g – Kat./h NO-Belastung

Tabelle 2

|  | Vergleichsbeispiel 2 | | Beispiel 2 | |
|---|---|---|---|---|
|  | Synthese bei Einsatz von Säure mit hoher Konzentration | | Synthese bei Einsatz von Säure mit niedriger Konzentration | |
|  | Gew.-% | n | Gew.-% | n |
| Schwefelsäurekonzentration |  |  |  |  |
| t = 0 h | 38,2 | 10,1 | 4,2 | 0,89 |
| t = 2 h | 38,0 | 10,0 | 3,5 | 0,74 |
| t = 5 h | 37,5 | 9,8 | 2,5 | 0,53 |
| Hydroxylammonium-sulfatkonzentration |  |  |  |  |
| t = 0 h | 0,4 |  | 0,3 |  |
| t = 2 h | 0,5 |  | 0,8 |  |
| t = 5 h | 0,9 |  | 1,9 |  |
| Mittlere Bildungsgeschwindigkeit von Hydroxylamin (HA) (mol-HA/l/h) | 0,016 |  | 0,042 |  |

Gemeinsame Bedingungen:    0,4 % Katalysatorgehalt der Suspension
0,56 l-NO/g - Kat./h NO-Belastung

Tabelle 3

| | Vergleichsbeispiel 3 | | Beispiel 3 | |
| | Synthese bei Einsatz von Säure mit hoher Konzentration | | Synthese bei Einsatz von Säure mit niedriger Konzentration | |
| | Gew.-% | n | Gew.-% | n |
|---|---|---|---|---|
| Schwefelsäurekonzentration | | | | |
| t = 0 h | 38,3 | 10,1 | 4,1 | 0,87 |
| t = 2 h | 37,9 | 10,0 | 2,8 | 0,59 |
| t = 5 h | 36,9 | 9,6 | 0,7 | 0,15 |
| Hydroxylammonium-sulfatkonzentration | | | | |
| t = 0 h | 0,3 | | 0,2 | |
| t = 2 h | 0,7 | | 1,7 | |
| t = 5 h | 1,8 | | 4,4 | |
| Mittlere Bildungsgeschwindigkeit von Hydroxylamin (HA) (mol-HA/l/h) | 0,048 | | 0,11 | |

Gemeinsame Bedingungen:   0,4 % Katalysatorgehalt der Suspension
1,12 1-NO/g - Kat./h NO-Belastung

**Patentansprüche**

1.   Verfahren zur Herstellung von Hydroxylammoniumsulfat durch katalytische Reduktion von Stickstoffmonoxid mit Wasserstoff in wäßriger Schwefelsäure in Gegenwart von suspendierten Platinträgerkatalysatoren bei erhöhter Temperatur, dadurch gekennzeichnet, daß man während der Reaktion eine Konzentration an freier Schwefelsäure von 0,3 n bis 3,0 n einhält und am Ende der Reaktion den Gehalt an freier Schwefelsäure abfallen läßt.

2.   Verfahren nach Anspruch 1, dadurch gekennzeichnet, daß man die Umsetzung in mehreren hintereinander geschalteten Reaktionszonen durchführt und einen Gehalt an freier Schwefelsäure von 0,3 n bis 3,0 n aufrechterhält und in der letzten Reaktionszone den Gehalt an freier Schwefelsäure auf 0,1 bis 0,3 n abfallen läßt.

3.   Verfahren nach den Ansprüchen 1 und 2, dadurch gekennzeichnet, daß man Schwefelsäure höherer Konzentration im Verlauf der Umsetzung zuführt.

4.   Verfahren nach den Ansprüchen 1 bis 3, dadurch gekennzeichnet, daß man die Umsetzung in mehreren hintereinander geschalteten Reaktionszonen durchführt und Schwefelsäure höherer Konzentration in die zweite und/oder folgenden Reaktionszonen zuführt.

Europäisches
Patentamt

**EUROPÄISCHER RECHERCHENBERICHT**

Nummer der Anmeldung

EP    92 11 6231

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | FR-A-2 005 436 (BASF) <br> * Seite 4; Beispiel 2 * <br> --- | 1 | C01B21/14 |
| A | US-A-3 313 595 (K.JOCKERS) <br> * Spalte 6; Ansprüche 1,2 * | 1,2 | |
| A,D | & DE-B-1 177 118 <br> --- | | |
| A | GB-A-1 179 120 (BAYER) <br> * Seite 3; Anspruch 3 * <br><br> ----- | 1 | |

RECHERCHIERTE SACHGEBIETE (Int. Cl.5 )

C01B

Der vorliegende Recherchenbericht wurde für alle Patentansprüche erstellt

| Recherchenort | Abschlußdatum der Recherche | Prüfer |
|---|---|---|
| DEN HAAG | 15 JANUAR 1993 | libberecht-verbeeck |